# EUROPÄISCHE PATENTANMELDUNG

(11) **EP 1 103 913 A1**
(43) Veröffentlichungstag der Anmeldung: **30.05.2001**
(21) Anmeldenummer: 99123205.9
(22) Anmeldetag: 25.11.1999
(51) Int. Cl.: G06K 9/20

(54) **Einsteckbarer, flächiger Kartenkörper mit einem Fingertip-Sensor**

(71) Anmelder: Infineon Technologies AG, 81669 München (DE)
(72) Erfinder: Riedel, Jens, 93049 Regensburg (DE); Plasa, Günther, 82031 Grünwad (DE)
(74) Vertreter: Epping, Wilhelm, Dipl.-Ing.

(57) **Zusammenfassung**

Die Erfindung schlägt einen Fingertip-Sensor in einem einsteckbaren, flächigen Kartenkörper mit einem gegen die Hauptfläche des Kartenkörpers verschiebbaren Trägerelement vor, das über ein Führungselement mit dem Kartenkörper mechanisch verbunden ist, wobei der Fingertip-Sensor auf dem Trägerelement angeordnet ist und über elektrische Verbindungen mit einem an dem Kartenkörper angeordneten Kontaktelement verbunden ist.

## Beschreibung

Die folgende Erfindung betrifft einen Fingertip-Sensor in einem einsteckbaren, flächigen Kartenkörper. In Bereichen, in denen eine Zugangsberechtigung durch den Nutzer abgefragt werden soll, gewinnen Fingertip-Sensoren zunehmend an Bedeutung. Unter Zugangskontrolle kann der tatsächliche Zugang zu einem Raum oder aber der Zugriff auf Dateien oder Bereiche eines Computers verstanden werden. Die Funktionsweise eines kapazitiv arbeitenden Fingertip-Sensors ist aus dem Stand der Technik bekannt. Der Aufbau und die Funktionsweise ist beispielsweise im IEEE Journal of Solid State Circuits Volume 33, Number 1, January 1998, _{"}A Finger Print Sensor Based on a Feedback Capacitive Sensing Scheme", M.Tartagni et al. beschrieben.

Der Fingertip-Sensor ist z.B. als Halbleiterchip mit einer kapazitiven Sensorfläche oder als passives Zellenfeld (z.B. Foliensensor) ausgeführt und ist gegen äußere mechanische Einflüsse sehr empfindlich. Er wird deshalb in ein Gehäuse eingebracht, das die Anforderungen bezüglich eines mechanischen Schutzes, eines ESD-Schutzes (Electro Static Discharge) erfüllt. Das Gehäuse ist in der Regel gleichzeitig so ausgebildet, dass eine elektrische Kontaktierung, z.B. mit einem PC (Personal Computer) oder zu einem andersartig ausgebildeten Interface gewährleistet ist. Im Falle des Anschlusses des Fingertip-Sensors an einen PC oder ein Notebook, wird die Verbindung üblicherweise über ein Kabel an die parallele Schnittstelle des PC S oder Notebook's vorgenommen. Der Fingertip-Sensor ist somit immer extern in einem Gehäuse untergebracht. Die Ausgestaltung erfordert einen hohen Material-und Kostenaufwand. Ein weiterer Nachteil besteht darin, dass beim Transport des PC S oder des Notebook s das Gehäuse mit dem Fingertip-Sensor entfernt und getrennt transportiert werden muss.

Andere Lösungen schlagen vor, den Fingertip-Sensor in einer Tastatur des PC's oder in der Maus unterzubringen. Sieht man von dem Erfordernis der speziellen Gehäusegestaltung der Tastatur einmal ab, ist die Flexibilität bei dieser Vorgehensweise gering. Insbesondere kann der Fingertip-Sensor dann beispielsweise nicht in Notebooks verwendet werden. In diesem Fall müsste ein zusätzliches Gehäuse mit dem Fingertip-Sensor bereitgestellt werden, das dann in der beschriebenen Weise mit einem Kabel über die parallele Schnittstelle mit dem Notebook verbunden wird. Damit ergeben sich die bereits weiter oben beschriebenen Nachteile.

Die Aufgabe der vorliegenden Erfindung besteht deshalb darin, eine Anordnung anzugeben, mit der ein Fingertip-Sensor auf einfache Weise mit verschiedenartigen Geräten kombiniert werden kann. Die Anordnung soll ferner möglichst einfach und kostengünstig realisierbar sein.

Diese Aufgabe wird mit den Merkmalen des Anspruchs 1 gelöst. Erfindungsgemäss ist vorgesehen, einen Fingertip-Sensor in einem einsteckbaren, flächigen Kartenkörper mit einem gegen die Hauptfläche des Kartenkörpers verschiebbaren Trägerelement vorzusehen, wobei das Trägerelement über ein Führungselement mit dem Kartenkörper mechanisch verbunden ist. Der Fingertip-Sensor ist dabei auf dem Trägerelement angeordnet und über elektrische Verbindungen mit einem an dem Kartenkörper angeordneten Kontaktelement verbunden.

Die Erfindung ermöglicht somit einen Fingertip-Sensor, der gegen mechanische Beschädigungen geschützt ist, sofern er nicht gebraucht wird. In diesem Fall sind das Trägerelement und der Kartenkörper derart zueinander angeordnet, dass der Fingertip-Sensor von aussen nicht zugänglich ist. Der einsteckbare, flächige Kartenkörper, der vorteilhafterweise im Format einer PCMCIA-Steckkarte ausgeführt ist, kann somit auf einfache Weise sowohl in einem PC oder in ein Notebook eingebracht werden. Beim Transport der Geräte, kann diese Steck-karte im vorgesehenen Schacht verbleiben, wobei der Fingertip-Sensor gegen mechanische Beschädigungen geschützt ist. Ist die Abfrage einer Zugangsberechtigung notwendig, so kann das Trägerelement derart gegenüber dem Kartenkörper verschoben werden, so dass der Fingertip-Sensor entsprechend seiner Funktion zugänglich ist.

Vorteilhafte Ausgestaltungen ergeben sich aus den Unteransprüchen.

In einer Weiterbildung ist das Führungselement derart angeordnet, dass das Trägerelement mit seinen zwei gegenüberliegenden Kanten parallel zu den benachbarten Kanten des Kartenkörpers verschoben wird.

In einer Ausgestaltung der Erfindung kann das Trägerelement auf dem Kartenkörper angeordnet sein. Die Hauptfläche des Kartenkörpers weist dann vorteilhafterweise eine Vertiefung auf, in der das Trägerelement in einem ersten Betriebszustand angeordnet ist, wobei die Vertiefung derart bemessen ist, dass die übrige Hauptfläche des Kartenkörpers und die Hauptfläche des Trägerelementes in einer Ebene liegen. Der Fingertip-Sensor ist dann auf der Seite des Trägerelementes angeordnet, die dem Kartenkörper zugewandt ist. In diesem Fall ist der Fingertip-Sensor in dem ersten Betriebszustand, d.h. dem Betriebszustand, in dem der Fingertip-Sensor nicht zugänglich sein soll, gegen jedwede Beschädigung durch Ver-kratzen oder Staub geschützt.

In einer anderen Ausgestaltung der Erfindung ist in einer Seitenfläche des Kartenkörpers eine parallel zu den Hauptflächen des Kartenkörpers laufende Ausnehmung vorgesehen, die in etwa die Abmasse des Trägerelementes aufweist und die in dem ersten Betriebszustand das Trägerelement vollständig aufnehmen kann. Das Trägerelement ist dann von allen Seiten in dem ersten Betriebszustand von dem Kartenkörper umgeben.

In beiden Varianten werden die Kartenkörper derart in den an einem PC, Notebook oder einem anderen Gerät vorgesehenen Schacht eingeführt, dass der Fingertip-Sensor für seinen Benutzer leicht zugänglich ist. Dies bedeutet, der Fingertip-Sensor ist mit seiner Oberseite dem Benutzer zugewandt.

In einer weiteren Ausgestaltung der vorliegenden Erfindung schliessen in dem ersten Betriebszustand eine Seitenfläche des Kartenkörpers und eine dieser Seitenfläche zugeordnete Kante des Trägerelementes in etwa bündig miteinander ab. In einem zweiten Betriebszustand liegen diese Seitenfläche und die der Seitenfläche zugeordnete Kante zueinander parallel. Dabei kommt die der Seitenfläche zugeordnete Kante dann ausserhalb des Kartenkörpers zu liegen. Dies bedeutet nichts anderes, als dass das Trägerelement und der Kartenkörper einer Schublade ähnlich zueinander angeordnet sind. Wird der Fingertip-Sensor nicht benötigt, verschwindet das Trägerelement im Inneren des Kartenkörpers bzw. derart, dass das Trägerelement nicht oder nur wenig über die seitlichen Begrenzungen des Kartenkörpers hinausragt. Wird der Fingertip-Sensor hingegen benötigt, ist das Trägerelement wie eine geöffnete Schublade gegenüber dem Kartenkörper verschoben.

In einer weiteren Ausgestaltung wird die elektrische Verbindung zwischen dem Fingertip-Sensor und dem Kontaktelement über mindestens eine Leiterbahn zumindest auf der Hauptfläche des Kartenkörpers und flexiblen Leitern oder Schleifkontakten in Verbindung mit Leiterbahnen auf dem Trägerelement vorgenommen.

Vorteilhafterweise ist zwischen dem Fingertip-Sensor und dem Kontaktelement eine Auswerteanordnung vorgesehen. Die Auswerteanordnung kann sowohl auf dem Kartenkörper als auch auf dem Trägerelement angeordnet sein. Sie könnte sogar auf dem gleichen Halbleiterchip wie der Fingertip-Sensor vorgesehen sein. Mit Hilfe der Auswerteanordnung ist eine Pegelanpassung zwischen den Signalen des Fingertip-Sensors und der mit dem Kartenkörper verbundenen Hardware-Einrichtung möglich. Es ist jedoch auch denkbar, bereits in der Auswerteanordnung einen Abgleich der von dem Fingertip-Sensor ermittelten Daten mit einem Referenzwert vorzunehmen.

In einer weiteren vorteilhaften Ausgestaltung ist eine Verschlüsselungseinheit in dem Fingertip-Sensor vorgesehen. Hierdurch kann die Sicherheit der von dem Kartenkörper zu der jeweiligen Hardwareanordnung übertragenen Daten erhöht werden. Die Sicherheit der Datenübertragung ist zudem bereits dadurch erhöht, dass zwischen dem Fingertip-Sensor und der Hardwareanordnung keinerlei Kabel benötigt werden. Das Abgreifen eines Datensignales ist somit nur noch schwer möglich. Wird die Verschlüsselung der Daten in unmittelbarer räumlicher Nähe zu dem Fingertip-Sensor vorgenommen, ist die Möglichkeit des Abgriffs eines (unverschlüsselten) Datensignals nahezu ausgeschlossen.

Vorteilhafterweise werden der Kartenkörper und dessen Kontaktelement in Form einer PCMCIA-Steckkarte ausgebildet. Da dieser Steckplatz in nahezu jedem PC oder Notebook vorhanden und gut erreichbar für einen Nutzer ist, bietet er sich insbesondere für die erfindungsgemässe einsteckbare Karte an. Prinzipiell ist jeder, an einem Hardware-Gerät vorhandene Steckplatz zur Aufnahme des Fingertip-Sensors geeignet, sofern der Kartenkörper entsprechende Kontaktelemente aufweist.

Die Erfindung sowie deren Vorteile und weitere Ausgestaltungsmöglichkeiten werden anhand der nachfolgenden Figuren näher erläutert. In den Figuren sind dabei gleiche Bauteile mit gleichen Bezugszeichen versehen. Es zeigen:
Figur 1 eine Draufsicht auf den erfindungsgemässen Fingertip-Sensor in einem einsteckbaren, flächigen Kartenkörper in einem ersten Betriebszustand,
Figur 2 eine Draufsicht auf den erfindungsgemässen Fingertip-Sensor in einem einsteckbaren, flächigen Kartenkörper in einem zweiten Betriebszustand,
Figur 3a, 3b einen Querschnitt entlang der Linie A-A' durch den Fingertip-Sensor gemäß Figur 1 und
Figur 4 eine Draufsicht auf ein weiteres Ausführungsbeispiel des erfindungsgemässen Fingertip-Sensors.

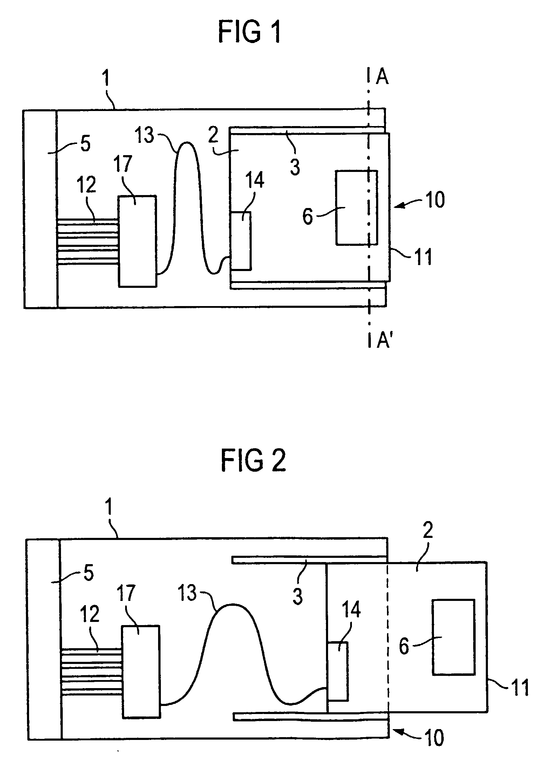

Figur 1 zeigt die Erfindung in einem ersten Betriebszustand. Auf der Hauptfläche 8 eines Kartenkörpers 1 ist ein Trägerelement 2 angeordnet. Das Trägerelement 2 ist durch Führungselemente 3 mit dem Kartenkörper 1 verbunden. Die Führungselemente 3 sind an zwei gegenüberliegenden Seiten des Trägerelementes 2 angeordnet. Sie sind derart auf der Hauptfläche 8 des Kartenkörpers 1 aufgebracht, dass sie parallel zu den langen Seitenkanten des Kartenkörpers 1 ausgerichtet sind. Das Trägerelement 2 ist entsprechend der Ausrichtung der Führungselemente 3 parallel zu den langen Seitenkanten des Trägerelementes 1 verschiebbar.

In der vorliegenden Figur 1 sind das Trägerelement 2 und der Kartenkörper 1 derart angeordnet, dass die Kante 11 des Trägerelementes nahezu deckungsgleich mit einer Seitenfläche 10 des Kartenkörpers 1 ausgerichtet ist. In diesem Betriebszustand ist die Verwendung eines Fingertip-Sensors 6, welcher sich auf dem Trägerelement 2 befindet, nicht möglich.

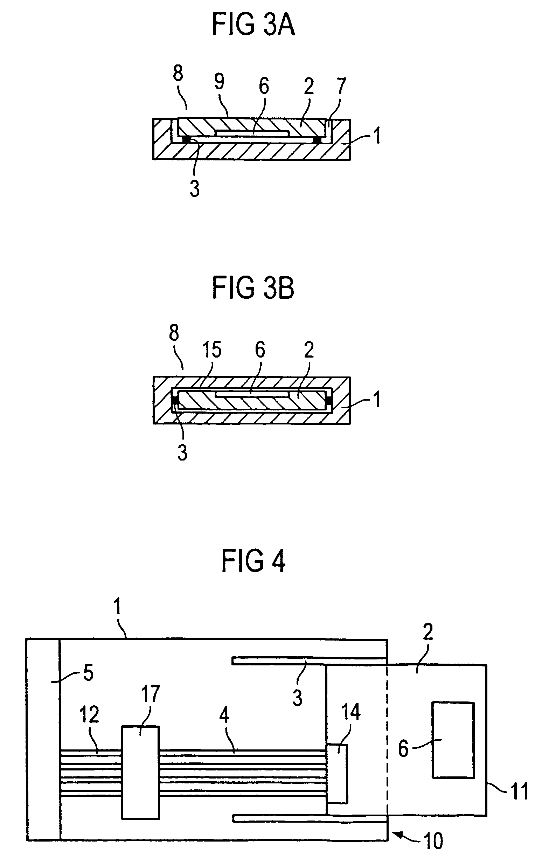

Je nach Ausgestaltung des Kartenkörpers 1 kann sich der Fingertip-Sensor 6 auf der Ober- bzw. Unterseite des Trägerelementes 2 befinden. Die Figuren 3a und 3b zeigen zwei mögliche Ausführungsvarianten. In Figur 3a weist der Kartenkörper 1 eine Vertiefung 7 auf. In diese Vertiefung 7 ist das Trägerelement 2 eingebracht. Die Führungselemente 3 befinden sich beispielhaft auf der dem Kartenkörper 1 zugewandten Seite des Trägerelementes 2. Diese könnten selbstverständlich jedoch auch an den schmalen Seitenkanten des Trägerelementes 2 vorgesehen sein. Wesentlich bei dieser Anordnung ist, dass die Hauptfläche 9 des Trägerelementes 2 nicht über die Hauptfläche 8 des Kartenkörpers 1 hinaussteht. Es wäre jedoch denkbar, daß die Hauptfläche 9 des Trägerelements 2 und die Hauptfläche 8 des Kartenkörpers 1 in einer Ebene liegen. Dies bedeutet, dass die Vertiefung 7 und die Dicke des Trägerelementes 9 sowie die Art und Befestigung des Führungselementes 3 bezüglich ihrer Abmaße aufeinander abgestimmt werden. Um den Fingertip-Sensor 6 vor einer mechanischen Beschädigung in dem ersten Betriebszustand schützen zu können, ist dieser auf der der Hauptfläche 9 gegenüberliegenden Seite des Trägerelementes 2 angeordnet. Er ist somit dem Kartenkörper 1 zugewandt.

Alternativ kann eine Seitenfläche 10 des Kartenkörpers 1 eine Ausnehmung 15 aufweisen, die in ihren Abmassen an die Dimensionen des Trägerelementes 2 angepasst ist. Das Trägerelement 2 ist in die Ausnehmung 15 eingebracht. Die Ausnehmung 15 ist derart ausgestaltet, dass diese sich parallel zu der Hauptfläche 8 in das Innere des Kartenkörpers 1 erstreckt. In der vorliegenden Figur 3b ist der Fingertip-Sensor 6 auf der der Hauptfläche 8 zugewandten Seite des Trägerelementes 2 angeordnet. Die Führungselemente 3 sind bei diesem Ausführungsbeispiel an den Seitenflächen des Trägerelementes 2 vorgesehen.

Die genaue Ausgestaltung der Führungselemente 3 ist nicht Gegenstand der vorliegenden Erfindung, auf eine genaue Beschreibung wird deshalb an dieser Stelle verzichtet. Prinzipiell kann hierunter jegliche Art von Führungselementen verstanden werden, die ein Verschieben des Trägerelementes gegenüber dem Kartenkörper erlaubt.

Prinzipiell wäre es auch denkbar, die Hauptfläche des Kartenkörpers 1 vollständig flächig auszuführen und das Trägerelement 2 auf der Hauptfläche 8 über die Führungselemente 3 zu befestigen. In diesem Fall wäre jedoch eine besondere Ausgestaltung eines Steckplatzes in einem Hardware-Gerät (z.B. PC) notwendig. Die in den Figuren 3a und 3b gezeigten Varianten weisen zudem den Vorteil auf, dass das Trägerelement 2 in der Vertiefung 7 bzw. der Ausnehmung 15 gegen eventuelle Beschädigungen besser geschützt ist.

Um die Verbindung zu einem Hardware-Gerät herstellen zu können, weist der Kartenkörper 1 in der Figur 1 ein Kontaktelement 5 auf. Dies kann beispielsweise einem Standard einer PCMCIA-Steckkarte angepasst sein. Ist der Kartenkörper jedoch anders ausgestaltet, so kann das Kontaktelement 5, bestehend aus einer Mehrzahl an Steckkontakten beliebig ausgestaltet sein. Das Kontaktelement 5 ist entsprechend der benötigten Kontakte über eine entsprechende Anzahl an Leiterbahnen 12 mit einer Auswerteanordnung 17 verbunden. Die Auswerteanordnung 17 dient beispielsweise dazu, die von dem Fingertip-Sensor 6 gelieferten Signalpegel an die Pegel des jeweiligen Hardware-Gerätes anzupassen. Ist die Auswerteanordnung 17 als intelligenter Halbleiterchip ausgeführt, so könnte bereits hier ein Vergleich der von dem Fingertip-Sensor 6 gelieferten Daten mit einem Referenzwert erfolgen. Dem jeweiligen Hardware-Gerät wird somit nur noch das Ergebnis dieses Vergleiches geliefert.

Die Auswerteanordnung 17 ist in einer Ausführungsform über einen flexiblen Leiter 13 mit einem Kontaktelement 14 auf dem Trägerelement 2 verbunden. Der flexible Leiter 13 kann beispielsweise als mehrpoliges Flachbandkabel ausgeführt sein. Es können jedoch auch mehrere gegeneinander verdrehte Drähte vorgesehen sein. Der flexible Leiter 13 ist derart geführt und von der Länge bemessen, dass dieser auch beim Verschieben des Trägerelementes 2 gegenüber dem Kartenkörper 1 ausreichend lang ist und die elektrische Verbindung sicherstellen kann.

Figur 2 zeigt den erfindungsgemässen Fingertip-Sensor in einem zweiten Betriebszustand, in dem das Trägerelement 2 gegenüber dem Kartenkörper 1 derart verschoben ist, dass der Fingertip-Sensor 6 zugänglich ist. Die Kante 11 des Trägerelementes 2 befindet sich im zweiten Betriebszustand parallel zu der Seitenfläche 10 des Kartenkörpers. Die Kante 11 ist im zweiten Betriebszustand ausserhalb der Umrandung des Kartenkörpers 1 angeordnet.

Das Verschieben des Trägerelementes 2 gegenüber dem Kartenkörper 1 kann prinzipiell auf zwei verschiedene Arten erfolgen. Im sogenannten Push-Pull-Prinzip wird das Trägerelement 2 vom ersten in den zweiten Betriebszustand dadurch gebracht, dass dieses durch den Nutzer aus dem Kartenkörper 1 _{"}gezogen" wird. Wird der Fingertip-Sensor 6 nicht mehr benötigt, so wird er durch das Hineinschieben des Trägerelementes 2 in den Kartenkörper 1 in einen geschützten Zustand gebracht.

Alternativ kann das sogenannte Push-Push-Prinzip verwendet werden. Soll der Fingertip-Sensor bzw. das Trägerelement vom geschützten Zustand in einen betriebsbereiten Zustand gebracht werden, so wird durch leichtes Drücken auf die Kante 11 des Trägerelementes ein Entriegelungs- und Federmechanismus in Gang gesetzt, der das Trägerelement entsprechend der Figuren 1 und 2 aus dem Kartenkörper 1 hinausschiebt. Dieser Entriegelungs- und Federmechanismus ist aus dem Stand der Technik bekannt und wird beispielsweise bei Schubladen verwendet. Soll das Trägerelement wieder in den Kartenkörper verbracht werden, wird das Trägerelement durch den Nutzer in den Kartenkörper 1 hineingeschoben. In diesem Falle wird wiederum der Verriegelungs- und Federmechanismus betätigt, der dann sicherstellt, dass die Kante 11 und die Seitenfläche 10 des Kartenkörpers 1 in etwa bündig übereinander liegen.

Bei den vorangegangenen beschriebenen Beispielen ist der Kartenkörper 1 derart ausgebildet, dass dieser die Abmasse einer PCMCIA-Steckkarte annimmt. Das Kontaktelement 5 ist entsprechend diesem Standard ausgebildet. In diesem Fall sind das Kontaktelement 5 und das Trägerelement 2 auf den zwei gegenüberliegenden, schmalen Seiten des Kartenkörpers 1 angeordnet. Das Verschieben des Kartenkörpers 2 gegenüber dem Trägerelement 1 findet dann grundsätzlich parallel der langen Seiten des Kartenkörpers 1 statt.

Die Erfindung ist jedoch nicht ausschliesslich auf diese besondere Ausgestaltung des Kartenkörpers 1 beschränkt. Sie eignet sich prinzipiell für alle beliebigen Ausgestaltungen des Kartenkörpers 1.

Figur 4 zeigt ein weiteres Ausführungsbeispiel des erfindungsgemässen Fingertip-Sensors in einem einsteckbaren, flächigen Kartenkörper. In diesem Ausführungsbeispiel ist der flexible Leiter durch weitere Leiterbahnen 12 auf dem Kartenkörper 1 ersetzt. Die elektrische Verbindung zwischen dem Kontaktelement 14 und diesen Leiterbahnen 12 wird mittels Schleifkontakten durchgeführt. Diese stellen während des Verschiebens des Trägerelementes 2 gegenüber dem Kartenkörper 1 die elektrische Verbindung zu dem Kontaktelement 5 sicher.

Alternativ könnten statt den Schleifkontakten auch sog. Senk-kontakte verwendet werden. Wird das Trägerelement durch ein Verschieben in den zweiten, d.h. den betriebsbereiten Zustand gebracht, senken sich Kontakte kurz vor dem Erreichen der Endpodition auf entsprechend positionierte Gegenkontakte. Die (Senk-)kontakte können entweder auf dem Trägerelement oder auf dem Kartenkörper angeordnet sein. Entsprechend befinden sich die Gegenkontakte dann im ersten Fall auf dem Kartenkörper, während sie im zweiten Fall auf dem Trägerelement angeordnet sind. Das Absenken der Kontakte kann beispielsweise durch einen Federmechanismus erfolgen.

Im ersten Betriebszustand, in welchem der Fingertipsensor nicht zugänglich ist, besteht dagegen keine elektronische Verbindung zwischen den (Senk-)kontakten und den Gegenkontakten.
Um eine Erhöhung der Sicherheit der von dem Fingertip-Sensor übertragenen Daten zu dem Kontaktelement 5 zu erzielen, kann eine Verschlüsselungseinheit (sogenannte Crypto-Unit) vorgesehen sein. Diese ist idealerweise in räumlicher Nähe zu dem Fingertip-Sensor 6 untergebracht. Die Verschlüsselungseinheit könnte beispielsweise auf dem gleichen Halbleiterchip wie der Fingertip-Sensor 6 untergebracht worden sein. Es ist jedoch auch denkbar, den Fingertip-Sensor 6 und die Verschlüsselungseinheit in zwei separaten Halbleiterchips unterzubringen und diese elektrisch mittels Leiterbahnen oder Bond-Drähten zu verbinden. Werden die beiden Halbleiterchips übereinander angeordnet, so wird das Abgreifen eines Datensignals vom den Fingertip-Sensor zu der Verschlüsselungseinheit weiter erschwert.

## Patentansprüche

1. Fingertip-Sensor in einem einsteckbaren, flächigen Kartenkörper (1) mit einem gegen die Hauptfläche des Kartenkörpers (1) verschiebbaren Trägerelement (2), das über ein Führungselement (3) mit dem Kartenkörper mechanisch verbunden ist, wobei der Fingertip-Sensor (6) auf dem Trägerelement (2) angeordnet ist und über elektrische Verbindungen (12, 13) mit einem an dem Kartenkörper (1) angeordneten Kontaktelement (5) verbunden ist.

2. Fingertip-Sensor, nach Anspruch 1, wobei das Führungselement (3) derart angeordnet ist, dass das Trägerelement (2) mit seinen zwei gegenüberliegenden Kanten parallel zu den benachbarten Kanten des Kartenkörpers (1) verschoben wird.

3. Fingertip-Sensor nach Anspruch 1 oder 2, wobei das Trägerelement (2) auf den Kartenkörper (1) angeordnet ist.

4. Fingertip-Sensor nach Anspruch 3, wobei die Hauptfläche 8 des Kartenkörpers (1) eine Vertiefung (7) aufweist, in der das Trägerelement (2) in einem ersten Betriebszustand angeordnet ist, und wobei die Vertiefung derart bemessen ist, dass die übrige Hauptfläche des Kartenkörpers (1) und die Hauptfläche (9) des Trägerelementes (2) in einer Ebene liegen.

5. Fingertip-Sensor nach Anspruch 1 oder 2, wobei in einer Seitenfläche (10) des Kartenkörpers (1) eine parallel zu den Hauptflächen des Kartenkörpers (1) verlaufende Ausnehmung vorgesehen ist, die in etwa die Abmasse des Trägerelementes (2) aufweist und die in einem ersten Betriebszustand das Trägerelement (2) vollständig aufnehmen kann.

6. Fingertip-Sensor nach einem der vorhergehenden Ansprüche, wobei in dem ersten Betriebszustand eine Seitenfläche des Kartenkörpers (1) und eine dieser Seitenflächen zugeordnete Kante (11) des Trägerelementes (2) in etwa bündig miteinander abschliessen und in einem zweiten Betriebszustand parallel zueinander liegen, wobei die der Seitenfläche zugeordnete Kante dann ausserhalb des Kartenkörpers (1) zum Liegen kommt.

7. Fingertip-Sensor nach einem der vorhergehenden Ansprüche, wobei die elektrische Verbindung zwischen dem Fingertip-Sensor und dem Kontaktelement durch mindestens eine Leiterbahn zumindest auf der Hauptfläche des Kartenkörpers (1) und flexiblen Leitern (13) oder Schleifkontakten in Verbindung mit Leiterbahnen auf dem Trägerelement (2) vorgenommen wird.

8. Fingertip-Sensor nach einem der vorhergehenden Ansprüche, wobei zwischen dem Fingertip-Sensor (6) und dem Kontaktelement (5) eine Auswerteanordnung (17) vorgesehen ist.

9. Fingertip-Sensor nach einem der vorhergehenden Ansprüche, wobei eine Verschlüsselungseinheit in den Fingertip-Sensor (6) vorgesehen ist.

10. Fingertip-Sensor nach einem der vorhergehenden Ansprüche, wobei der Kartenkörper und dessen Kontaktelement als PCMCIA-Steckkarte ausgebildet sind.
